# EUROPEAN PATENT SPECIFICATION

(11) **EP 1 751 410 B1**
(45) Date of publication and mention of the grant of the patent: **23.07.2008**
(21) Application number: 05747255.7
(22) Date of filing: 31.05.2005
(51) Int. Cl.: F01P 5/12, F04D 13/02, F02B 39/06, H02K 7/10

(54) **DRIVE PULLEYS**
ANTRIEBSRIEMENSCHEIBEN
POULIES D'ENTRAINEMENT

(30) Priority: 02.06.2004 GB 0412278
(43) Date of publication of application: 14.02.2007
(73) Proprietor: Nexxtdrive Limited, London SW1Y 5HF (GB)
(72) Inventor: MOELLER, Frank, Milford, Stafford ST17 0UN (GB)
(74) Representative: Jennings, Nigel Robin
(86) International application number: PCT/GB2005/002144
(87) International publication number: WO 2005/119023

(56) References cited:
- DE-A1- 2 926 426
- DE-A1- 10 023 508
- DE-A1- 10 214 637
- DE-B- 1 197 761
- GB-A- 644 096

## Description

The present invention relates to drive pulleys for connection to an engine, particularly an automotive engine, for driving auxiliary equipment, such as a coolant pump, which circulates cooling liquid within a cooling circuit, or a cooling fan, which blows air round and/or through a radiator or a compressor, such as an air conditioning compressor.

Internal combustion engines commonly include a coolant pump and/or a cooling fan (which will be referred to together in this specification as a "cooling pump") for the purpose of dissipating excess heat from the engine and preventing it from overheating. Such a cooling pump commonly has an input shaft carrying a pulley which is driven by a pulley belt which also passes around a drive pulley mounted directly on one end of the engine crankshaft or on a shaft driven by the crankshaft. The speed of the drive pulley is thus usually directly related to the speed of the engine.

However, an internal combustion engine has a specific temperature range at which it operates with maximum efficiency and the excess heat which needs to be removed by the cooling pump to ensure that it is within this temperature range varies with a number of factors including vehicle speed, engine load and ambient temperature. Thus the amount of heat that is desirably removed from an engine operating in a high ambient temperature under a high load in a vehicle moving at low speed is very much greater than that which is desirably removed from an engine operating in a low ambient temperature under low load in a vehicle moving at high speed.

The speed of a conventional cooling pump is, however, altered in dependence only on the speed of the engine and not on any of the factors referred to above. Since overheating is particularly harmful to an engine, the cooling pump and the pulleys that drive it are conventionally sized so that the heat removed from an engine is sufficiently large under all conditions and this necessarily means that the amount of heat removed is unnecessarily large for much of the operating life of an engine. This means that such engines commonly operate at a temperature less than the optimum for a considerable proportion of their service life. Furthermore, as a result of the fact that the cooling pump may consume up to about 10% of the total power output of the engine, this means that power is wasted in the cooling pump for much of its operating life, which in turn means that the overall operating efficiency of the engine is less than that which could theoretically be achieved.

DE-B-1197761 discloses a variable speed drive system in the form of a drive pulley including an input for connection to an engine and an output comprising a hollow cylindrical member whose outer surface constitutes a pulley belt engagement surface. The input and output are connected by a transmission system including an epicyclic gearset comprising two or more planet gears, which are connected to respective planet shafts to rotate about the axis thereof and are in mesh with a sun gear. The planet shafts are connected to a common carrier, which constitutes the input. The sun gear is connected to the output, and the transmission system is at least partially accommodated within the hollow cylindrical member.

DE-A-2926426 discloses a motor vehicle drive system including an internal combustion engine whose speed may be controlled, a supercharger in the engine inlet duct and a transmission system comprising an epicyclic gearset by means of which the supercharger is connected to the engine. An accelerator pedal is connected not only to a fuel pump but also to the transmission system such that movement of the accelerator pedal will result in a variation in the output speed of the transmission system and thus also in variation in the output pressure of the supercharger.

It is, therefore, an object of the present invention to provide a drive pulley and a drive pulley incorporating such a system for connection to an engine which permits a cooling pump or the like connected to it to be driven at a speed which is independent of engine speed.

Various different types of transmission system with a continuously variable transmission system are known but such transmission systems are not only generally expensive but also bulky. The latter characteristic is particularly problematic with automotive engines because underbonnet space in automotive vehicles is already at a premium and it would constitute a significant problem for automotive designers if they were required to accommodate yet a further bulky item in the very limited space which is typically available.

It is therefore a further object of the present invention to provide a pulley of the type referred to above which requires little or no additional space and may thus readily be accommodated in the underbonnet space of a motor vehicle. According to the present invention, there is provided a pulley wheel for a cooling pump or the like of an engine as set forth in Claim 1.

The drive pulley in accordance with the present invention thus constitutes an integrated unit comprising a pulley wheel and a transmission system of constantly variable output ratio. Whilst automotive pulley wheels used typically to be of single V type, which has a relatively small axial length, modern automotive pulley wheels are now typically of so-called multi-V type, which have a relatively large axial length. Such pulley wheels are normally hollow and take up a considerable amount of space. However, the transmission system is at least partially accommodated within the hollow cylindrical member whose outer surface constitutes the pulley belt engagement surface and the additional space requirement of the transmission system is therefore very low.

The transmission system of the drive pulley in accordance with the invention does not require any internally toothed ring gear. It has the advantage that the diameter of the transmission is considerably smaller than would be the case if a conventional ring gear or annulus were used, so that the transmission system can readily be dimensioned to fit, at least partially, within a conventional automotive pulley. In practice, all the gear wheels will be spur gears and, since these are all externally toothed, their cost is very low.

In use, one of the motor/generators generally acts as a generator and transmits electrical power to the other motor/generator which acts as a motor. The amount of electrical power so transmitted may be selectively varied by means of the controller, thereby altering the transmission ratio of the transmission system. Power is thus transmitted through the transmission system both mechanically and electrically, in proportions which vary with the varying transmission ratio. The output speed of the transmission system, and thus the speed of the pulley, may thus be varied independently of the input speed, which means that the speed of a fan, water pump or the like driven by the pulley in accordance with the invention may be varied independently of the speed of the engine, which means in turn that it may be operated precisely at the speed which is most appropriate for the instantaneous cooling requirement of the engine. Power is thus not needlessly consumed by the fan or water pump, whereby the overall efficiency of the engine is increased.

It is convenient if the two motor/generators are accommodated in a compartment which is sealed from the planet and sun gears, thereby eliminating the risk that the motor/generators may be contaminated with oil and the like from the gearset and it is further preferred that the compartment accommodating the motor/generators is within the cylindrical member.

The first and second planet gears may be directly in mesh with the first and second sun gear, respectively. In this event, the epicyclic gear set will be of so-called plus type. An epicyclic gearset is of plus type if the sun gear and the gear element with which the planet gears are in mesh rotate in the same direction when the carrier is held stationary whilst it is of minus type if rotation of the sun gear in one direction results in rotation of the gear element with which the planet gears are in mesh in the opposite direction, whilst the carrier is held stationary.

It is found that it is, in fact, more convenient for the epicyclic gearset to be of minus type because this results in the so-called R₀ ratio being lower. R₀ is defined as the ratio of the number of teeth on the sun gear to the number of teeth on the gear element with which the planets are in mesh. It is therefore preferred that either the first or the second planet gears are in mesh with respective idler gears which are in mesh with the first or second sun gear, whereby the first or second planet gears are only indirectly in mesh with the first or second sun gear, respectively.

The first and second planet gears are connected together in pairs to rotate together. To this end, each pair of first and second planet gears may constitute a single unit which rotates as a body about the associated planet shaft. Alternatively, each first and second planet gear may be non-rotatably carried by the associated planet shaft, that is to say, they are rigidly connected to it or even form an integral part of it, and in this event the planet shafts are themselves mounted to rotate about their own axes with respect to the carrier.

In the preferred embodiment, the controller is connected to a temperature sensor and is arranged to vary the electrical power transmitted between the two motor/generator units in dependence on the magnitude of the signal received from the temperature sensor. The controller is, in practice, arranged such that as the temperature sensed by the sensor increases, the speed of the output increases also. This means that, in use, as the engine gets hotter, the speed of the air fan or water pump is increased, thereby increasing the rate at which heat is extracted from the engine and thus cooling the engine.

It is preferred also that the controller is connected to a rechargeable battery and is arranged additionally to control the flow of electrical power between the two motor/generators and the battery. Thus, if power is required for a brief period of time by one of the motor/generators in excess of the ability of the other motor/generator to provide it, the additional power may be extracted from the battery. At those times when there is excess power available at one or other motor/generator, the controller may be operated to divert this power to the battery to recharge it. This embodiment opens up the possibility in a motor vehicle of omitting the conventional alternator and using one or both of the motor/generators to fulfil its usual function. This will result in a significant saving of underbonnet space and also a financial economy. It is also preferred that one or both of the motor/generators is used to replace the starter motor, which is conventionally provided on motor vehicles, and this results in yet a further saving in space and a further financial economy. If the automotive engine is to be started using one of the motor/generators as a starter motor, the controller operates to direct power from the electrical battery to it. In order to ensure that the resulting rotation of the motor/generator unit does not result simply in rapid rotation of the pulley and thus of the fan or water pump to which it is connected, it is preferred that the pulley includes a stationary member, to which the stators of the two motor/generators are connected, and a selectively operable lock arranged to lock the cylindrical member to the stationary member. Thus, when this lock is operated, the output of the pulley is unable to rotate and this means that operation of one of the motor/generators as a starter motor will result in rotation of the input of the pulley and thus in rotation of the engine to which the pulley is connected, thereby starting it.

Further features and details of the invention will be apparent from the following description of one specific embodiment of a drive pulley in accordance with the invention, which is given by way of example only with reference to the accompanying drawings, in which:
Figure 1 is an axial sectional view of an automotive drive pulley in accordance with the invention; and
Figure 2 is a schematic transverse sectional view on the line I-I in Figure 1.

The pulley illustrated in the drawings is shown connected to the crankshaft 2 of an engine. The crankshaft 2 is connected to the input of a transmission system comprising an epicyclic gearset, the output of which is connected to a hollow cylindrical member 4 of generally cup shape, the circular section external surface of which contains a plurality of V-shaped grooves and constitutes the belt-engaging surface 6 of a multi-V pulley.

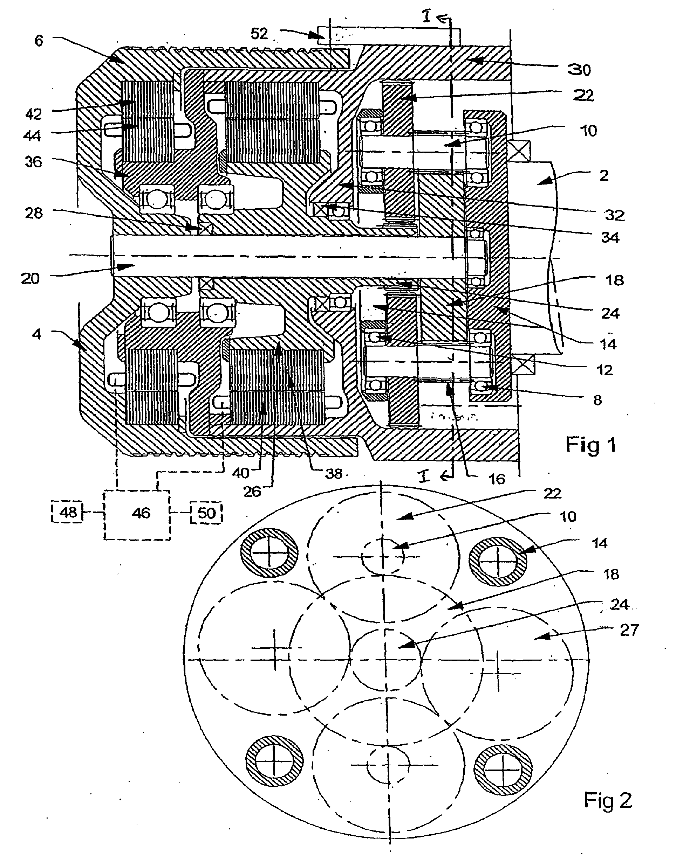

More specifically, the input includes two ball bearings 8, which are carried and connected together by an annular ring. The ball bearings 8 accommodate one end of a respective planet shaft 10 of the epicyclic gearset, the other end of which is accommodated in a further respective ball bearing 12. The two ball bearings 12 are carried and connected together by a further annular ring. The two annular rings are connected together by four pillars, which are visible only in Figure 2. The two rings and the four pillars together constitute the carrier 14 of the gearset, to which the crankshaft is connected. A portion of the length of each planet shaft 10 is toothed and constitutes a first planet gear 16. The two planet gears 16 are in mesh with a first sun gear 18, which is non-rotatably carried by a shaft 20, which is in turn non-rotatably connected to the hollow cylindrical or cup-shaped member 4. Also non-rotatably connected to the planet shafts 10 are respective second planet gears 22, which are in mesh with a second sun gear 24. In this case, the planet gears 22 are only indirectly in mesh with the sun gear 24. This is achieved by the fact that each planet gear 22 is in direct mesh with an associated idler gear 27, which is in turn in direct mesh with the sun gear 24. The epicyclic gear set is therefore of minus type because if the sun gear 18 is rotated in one direction and the carrier 14 is retained stationary, the sun gear 24 is caused to rotate in the opposite direction.

The sun gear 24 is connected to a hub 26, through which the shaft 20 passes. At the position at which the shaft 20 passes out of the hub 26, there is an annular oil seal 28. The transmission system also includes a generally hollow cylindrical stationary member 30, extending inwardly from the inner surface of which there is a generally radial apertured flange 32. The free edge of the aperture in the flange 32 carries both a bearing to support the hub 26 and also a further oil seal 34. At its end remote from the input, the stationary member also carries a further annular hub 36. Connected to the hub 26 is the rotor 38 of a first motor/generator, the stator 40 of which is connected to the stationary member 30. Connected to the interior of the cup-shaped cylindrical member 4 is the rotor 42 of a second motor/generator, the stator 44 of which is connected to the hub 36. The electrical connections of the two stators 40, 42 are connected to a controller 46. Also connected to the controller 46 is an electric battery 48 and a temperature sensor 50.

The stationary member 30 has a cylindrical portion, which is closely surrounded by the cylindrical portion of the cup shaped member 4. These two cylindrical members are provided with a lock, which is shown only indicatively at 52, arranged to selectively lock the member 4 to the member 30 and thus to prevent rotation of the member 4.

As may be seen, a significant proportion of the transmission system is accommodated within the cylindrical member 4 which effectively constitutes the pulley, and the remainder is accommodated within that portion of the stationary member 30 which extends out of the cylindrical member 4. The two motor/generators are accommodated wholly within the cylindrical member 4 within a compartment which is sealed from the epicyclic gearset by the oil seals 28, 34, whereby there is no risk of their being contaminated by oil or the like.

In use, the input of the transmission system, namely the carrier 14 and planet shafts 10, are connected to the crankshaft 2 of an engine or some other shaft rotated by the engine. A pulley belt is placed around the pulley surface 6 and around the surfaces of one or more driven pulleys connected to the cooling fan, a water pump or some other auxiliary unit whose speed is to be altered independently of the speed of the engine. Rotation of the crankshaft 2 will result in rotation of the cylindrical member 4 at a speed which may be independent of the speed of the crankshaft 2 but is dependent on the controller 46, specifically on the amount of power permitted by the controller 46 to be transmitted from one of the motor/generators, which operates as a generator, to the other of the motor/generators, which acts as a motor. The controller 46 will be operated in dependence on the signal received from the temperature sensor 50 and optionally also on the signals received from one or more further sensors responsive to e.g. ambient temperature, speed of the vehicle and the like. In practice, when the engine is started from cold, little or no cooling may be required and the controller is operated such that the output speed of the transmission system and thus the speed of the pulley surface 6 is only at a low value or even zero. As the operating temperature of the engine approaches the desired value, the controller 46 responds to the signal from the sensor 50 to vary the amount of electrical power transferred between the two motor/generators to increase the speed of the output until the rate of heat extraction is sufficient to maintain the engine temperature within the desired range. If the ambient temperature should rise or the engine load should increase, for instance as a result of climbing a hill, the operating temperature of the engine will begin to rise and this fact will be communicated to the controller 46 by the sensor 50 which will then operate to increase the output speed of the transmission system. If that motor/generator which is operating as a motor should need more electrical power than is available from the other motor/generator, the controller 46 may be operated to permit the necessary amount of power to flow from the battery 48 to the motor. At those times when excess electrical power is available at one or other motor/generator, the controller 46 is operated to direct this power to recharge the battery 48.

## Claims

1. A drive pulley for a fan wheel, cooling pump or the like of an engine, the pulley including an input (14) for connection to the engine and an output comprising a hollow cylindrical member (4), whose outer surface constitutes a pulley belt engagement surface, the input and output being connected by a transmission system comprising an epicyclic gearset comprising two or more first planet gears (16), which are connected to respective planet shafts (10) to rotate about the axis thereof and are in mesh with a first sun gear (18), the planet shafts (10) being connected to a common carrier (14), which constitutes the input, the first sun gear (18) being connected to the output (4) and the transmission system being at least partially accommodated within the hollow cylindrical member (4), **characterised in that** two or more second planet gears (22) are connected to rotate with respective first planet gears (16) and are in mesh with a second sun gear (24) and that the transmission system further includes two electric motor/generators (38, 40; 42, 44), the rotors (38, 44) of which are connected to the second sun gear (24) and the output (6), respectively, and the electrical stator connections of which are connected to a controller (46) arranged selectively to control the flow of electrical power between them.

2. A pulley as claimed in claim 1 in which the two motor/generators (38, 40; 42, 44) are accommodated in a compartment which is within the cylindrical member (4) and sealed from the planet (16, 22) and sun gears (18, 24).

3. A pulley as claimed in claim 1 or 2 in which the first and second planet gears (16, 22) are directly in mesh with the first and second sun gear (18, 24), respectively.

4. A pulley as claimed in claim 1 or 2 in which one of the first and second planet gears (16, 22) are in mesh with respective idler gears (27) which are in mesh with the first or second sun gear (18, 24), whereby the said one of the first and second planet gears are indirectly in mesh with the associated sun gear (18, 24).

5. A pulley as claimed in any one of the preceding claims, in which the first and second planet gears (16, 22) are non-rotatably carried by the respective planet shaft and the planet shafts (10) are mounted to rotate about their own axes with respect to the carrier.

6. A pulley as claimed in any one of the preceding claims in which the controller (46) is connected to a temperature sensor (50) and is arranged to vary the electrical power transmitted between the two motor/generators (38, 40; 42, 44) to the effect that as the temperature sensed by the sensor (50) increases, the speed of the output (4) increases also.

7. A pulley as claimed in any one of the preceding claims in which the controller (46) is also connected to a rechargeable battery (48) and is arranged additionally to control the flow of electrical power between the two motor/generators (38, 40; 42, 44) and the battery (48) .

8. A pulley as claimed in any one of the preceding claims including a stationary member (30), to which the stators (40, 44) of the two motor/generators are connected, and a selectively operable lock (52) arranged to lock the cylindrical member (4) to the stationary member (30).

## Patentansprüche

1. Antriebesriemenscheibe für ein Ventilatorrad, eine Kühlpumpe oder Ähnliches eines Motors, wobei die Riemenscheibe eine Eingabe (14) zur Verbindung mit dem Motor und eine Ausgabe umfassend ein zylindrisches Hohlelement (4), dessen Außenfläche eine Riemenrad-Angriffsfläche darstellt, aufweist, wobei die Eingabe und Ausgabe über ein Getriebesystem verbunden sind, das ein Planetengetriebe mit zwei oder mehreren ersten Planetenrädern (16) umfasst, die mit den jeweiligen Planetenwellen (10) zur Drehung um deren Achse verbunden sind und mit einem ersten Sonnenrad (18) in Eingriff stehen, wobei die Planetenwellen (10) mit einem gemeinsamen Träger (14) verbunden sind, der die Eingabe darstellt, wobei das erste Sonnenrad (18) mit der Ausgabe (4) verbunden ist, und das Getriebesystem zumindest teilweise im zylindrischen Hohlelement (4) angeordnet ist, **dadurch gekennzeichnet, dass** zwei oder mehrere zweite Planetenräder (22) zur Drehung mit den jeweiligen ersten Planetenrädern (16) verbunden sind und mit einem zweiten Sonnenrad (24) in Eingriff stehen, und dass das Getriebesystem weiters zwei elektrische Motor/Generatoren (38, 40; 42, 44) enthält, deren Rotoren (38, 44) mit dem zweiten Sonnenrad (24) bzw. mit der Ausgabe (6) verbunden sind, und deren elektrischen Statorverbindungen mit einer Steuer- bzw. Regulierungseinheit (46) verbunden sind, die angeordnet ist, um den Fluss von elektrischer Leistung zwischen ihnen selektiv zu steuern bzw. zu regulieren.

2. Riemenscheibe nach Anspruch 1, wobei die beiden Motor/Generatoren (38, 40; 42, 44) in einem Abteil angeordnet sind, das im zylindrischen Element (4) liegt und gegenüber den Planetenrädern (16, 22) und den Sonnenrädern (18, 24) dicht abgeschlossen ist.

3. Riemenscheibe nach Anspruch 1 oder 2, wobei die ersten und zweiten Planetenräder (16, 22) im direkten Eingriff mit den ersten bzw. zweiten Sonnenrädern (18, 24) stehen.

4. Riemenscheibe nach Anspruch 1 oder 2, wobei eines der ersten und zweiten Planetenräder (16, 22) mit den jeweiligen Zwischenrädern (27) in Eingriff steht, die mit den ersten oder zweiten Sonnenrädern (18, 24) in Eingriff stehen, wodurch das eine der ersten und zweiten Planetenräder mit dem zugehörigen Sonnenrad (18, 24) indirekt in Eingriff steht.

5. Riemenscheibe nach einem der vorherigen Ansprüche, wobei die ersten und zweiten Planetenräder (16, 22) von der jeweiligen Planetenwelle nicht drehbar getragen werden, und wobei die Planetenwellen (10) angebracht sind, um sich hinsichtlich des Trägers um die eigenen Achsen herum zu drehen.

6. Riemenscheibe nach einem der vorherigen Ansprüche, wobei die Steuer- bzw. Regulierungseinheit (46) mit einem Temperatursensor (50) verbunden und angeordnet ist, um die elektrische Leistung, die zwischen den beiden Motor/Generatoren (38, 40; 42, 44) übertragen wird, zu variieren, um zu bewirken, dass, wenn sich die vom Sensor (50) erkannte Temperatur erhöht, sich auch die Geschwindigkeit der Ausgabe (4) erhöht.

7. Riemenscheibe nach einem der vorherigen Ansprüche, wobei die Steuer- bzw. Regulierungseinheit (46) ebenfalls mit einer wiederaufladbaren Batterie (48) verbunden und angeordnet ist, um zusätzlich den Fluss von elektrischer Leistung zwischen den beiden Motor/Generatoren (38, 40; 42, 44) und der Batterie (48) zu steuern bzw. zu regulieren.

8. Riemenscheibe nach einem der vorherigen Ansprüche, mit einem ortsfesten Element (30), mit dem die Statoren (40, 44) der beiden Motor/Generatoren verbunden sind, und mit einer selektiv betreibbaren Verriegelung (52), die angeordnet ist, um das zylindrische Element (4) mit dem ortsfesten Element (30) zu verriegeln.

## Revendications

1. Poulie d'entraînement pour un ventilateur, une pompe de refroidissement ou un élément analogue d'un moteur, la poulie comprenant une entrée (14) pour raccordement au moteur et une sortie qui comprend un élément cylindrique creux (4) dont la surface extérieure constitue une surface de mise en prise d'une courroie de poulie, l'entrée et la sortie étant raccordées par un système de transmission qui comprend un train épicycloïdal d'engrenages qui comprend deux ou plusieurs premiers engrenages satellites (16) qui sont raccordés à des axes de satellite respectifs (10) pour tourner autour de l'axe de ceux-ci et engrènent avec un premier pignon planétaire (18), les axes de satellite (10) étant raccordés à un support commun (14) qui constitue l'entrée, le premier planétaire (18) étant raccordé à la sortie (4), et le système de transmission étant au moins partiellement contenu dans l'élément cylindrique creux (4), **caractérisé en ce que** deux ou plusieurs deuxièmes satellites (22) sont raccordés pour tourner avec les premiers satellites (16) respectifs et engrènent avec un deuxième planétaire (24), et **en ce que** le système de transmission comprend en outre deux moteurs / générateurs électriques (38, 40 ; 42, 44), dont les rotors (38, 44) sont raccordés respectivement au deuxième planétaire (24) et à la sortie (6), et dont les connexions électriques de stator sont raccordées à un dispositif de commande (46) disposé pour commander de façon sélective la circulation de l'énergie électrique entre eux.

2. 1Poulie selon la revendication 1, dans laquelle les deux moteurs / générateurs (38, 40 ; 42, 44) sont disposés dans un compartiment qui est dans l'élément cylindrique (4) et est étanche par rapport aux satellites (16, 22) et aux planétaires (18, 24).

3. Poulie selon les revendications 1 ou 2,1 dans laquelle les premiers et deuxièmes satellites (16, 22) engrènent directement respectivement avec les premier et deuxième planétaires (18, 24).

4. Poulie selon les revendications 1 ou 2, dans laquelle un des premiers et deuxièmes satellites (16, 22) engrènent avec des pignons intermédiaires respectifs (27) qui engrènent avec le premier ou le deuxième planétaire (18, 24), ce par quoi ledit un des premiers et deuxièmes satellites engrènent indirectement avec le planétaire associé (18, 24).

5. Poulie selon l'une quelconque des revendications précédentes, dans laquelle les premiers et deuxièmes satellites (16, 22) sont portés de façon à ne pas pouvoir tourner par les axes de satellite respectif, et les axes de satellite (10) sont montés pour pouvoir tourner autour de leur propre axe par rapport au support.

6. Poulie selon l'une quelconque des revendications précédentes, dans laquelle le dispositif de commande (46) est connecté à un capteur de température (50) et est disposé pour faire varier la puissance électrique transmise entre les deux moteurs / générateurs (38, 40 ; 42, 44) pour faire que, quand la température détectée par le capteur (50) augmente, la vitesse de la sortie (4) augmente également.

7. Poulie selon l'une quelconque des revendications précédentes, dans laquelle le dispositif de commande (46) est également raccordé à une batterie rechargeable (48) et est disposé additionnellement pour commander la circulation de puissance électrique entre les deux moteurs / générateurs (38, 40 ; 42, 44) et la batterie (48).

8. Poulie selon l'une quelconque des revendications précédentes, comprenant un élément stationnaire (30) auquel les stators (40, 44) des deux moteurs / générateurs sont raccordés, et un verrou qui peut être actionné de façon sélective (52), disposé pour fixer l'élément cylindrique (4) à l'élément stationnaire (30).
